# EUROPEAN PATENT SPECIFICATION

(11) **EP 4 174 256 B1**
(45) Date of publication and mention of the grant of the patent: **25.02.2026**
(21) Application number: 21930589.3
(22) Date of filing: 16.09.2021
(51) Int. Cl.: E04H 5/02, E04F 15/16, E04H 3/08, E04B 2/74

(54) **CLEAN ROOM FACILITY**
REINRAUMANLAGE
INSTALLATION DE SALLE BLANCHE

(43) Date of publication of application: 03.05.2023
(73) Proprietor: Hitachi Global Life Solutions, Inc., Tokyo 105-8410 (JP)
(72) Inventor: NISHIMURA, Noritoshi, Tokyo 105-8410 (JP); IMAGUCHI, Nobuhiro, Tokyo 105-8410 (JP); SATO, Yuuiti, Tokyo 105-8410 (JP)
(74) Representative: MERH-IP Matias Erny Reichl Hoffmann Patentanwälte PartG mbB
(86) International application number: PCT/JP2021/034079
(87) International publication number: WO 2023/042332

(56) References cited:
- EP-A1- 0 812 969
- DE-A1- 3 616 896
- JP-A- 2004 353 875
- JP-A- 2019 099 585
- JP-A- H0 868 221
- JP-U- 3 145 829
- US-A1- 2013 086 860

## Description

### TECHNICAL FIELD

The present invention relates to a clean room facility.

### BACKGROUND ART

A clean room at a high air cleanliness level is used in various fields such as regenerative medicine and manufacturing of pharmaceutical products, semiconductors, and precision machines. As one of techniques for preventing insects from entering a clean room, Patent Document 1 discloses that "an apparatus for preventing insect invasion for preventing the insect from invading an area to be objected through a floor surface" is provided.
Patent Document 2 discloses grid partition for clean rooms consisting of panel-like tabular wall elements and elongated connecting and connecting elements. Patent Document 3 a sterile room structure having an air wall suspended from a purlin. The air wall and an outer wall and fixed walls comprise panels of high density phenolic resin construction. The panels are machined along the side edges to provide recesses for interengagement.

### RELATED ART DOCUMENT

### PATENT DOCUMENTS

Patent Document 1: Japanese Laid-Open Patent Application, Publication No. 2011-223926
Patent Document 2 : DE 3616896 A1
Patent Document 3: EP 0 812 969 A1

### SUMMARY OF THE INVENTION

### PROBLEMS TO BE SOLVED BY THE INVENTION

The apparatus for preventing insect invasion disclosed in Patent Document 1 includes an air blower in an underfloor space so as to clear off insects using air pressure of the air blower. The above-described structure in which the underfloor space is provided exclusively for the air blower increases a cost of a clean room facility. Additionally, it is difficult to, for example, install an air blower newly in a space under an existent floor base.

In light of the described above, the present invention has been made in an attempt to provide a clean room facility which prevents an insect from entering the clean room at a low cost.

### MEANS FOR SOLVING THE PROBLEMS

A clean room facility includes; a first sheet that is provided on an upper side of a floor base of a clean room and forms a floor surface of the clean room; and a second sheet that is provided between the floor base and the first sheet. The second sheet is provided also under a panel member which serves as a side wall of the clean room and is extended to a vicinity of an exterior wall of a building including the clean room. The second sheet is bonded to an upper surface of the floor base and an edge of the second sheet is bonded to a lower end of a wall surface of the exterior wall or is bonded to a step part provided at the exterior wall. Other means for solving the problems will be described in an embodiment of the present invention.

### ADVANTAGEOUS EFFECTS OF THE INVENTION

The present invention can provide a clean room facility which prevents an insect from entering the clean room at a low cost.

### BRIEF DESCRIPTION OF THE DRAWINGS

FIG. 1 is a diagram for explaining a layout of rooms in a clean room facility according to an embodiment of the present invention.
FIG. 2 is a partial cross sectional diagram illustrating the clean room facility according to the embodiment.
FIG. 3 is a partial exploded perspective diagram illustrating the clean room facility according to the embodiment.
FIG. 4 is another partial cross sectional diagram illustrating the clean room facility according to the embodiment.
FIG. 5 is a diagram for explaining a range in which a base sheet is disposed, when viewed from the above, in the clean room facility according to the embodiment.
FIG. 6A is a cross sectional diagram illustrating a clean room facility including an exterior wall, a floor base, and a base sheet according to a non-claimed first variation of the present disclosure**.**
FIG. 6B is a cross sectional diagram illustrating a clean room facility including an exterior wall, a floor base, and a base sheet according to a second variation of the present invention.
FIG. 6C is a cross sectional diagram illustrating a clean room facility including an exterior wall, a floor base, and a base sheet according to a non-claimed third variation of the present disclosure.
FIG. 6D is a cross sectional diagram illustrating a clean room facility including an exterior wall, a floor base, and a base sheet according to a fourth variation of the present invention.
FIG. 7 is a partial cross sectional diagram illustrating a clean room facility according to a comparative example of the present invention.

### EMBODIMENTS FOR CARRYING OUT THE INVENTION

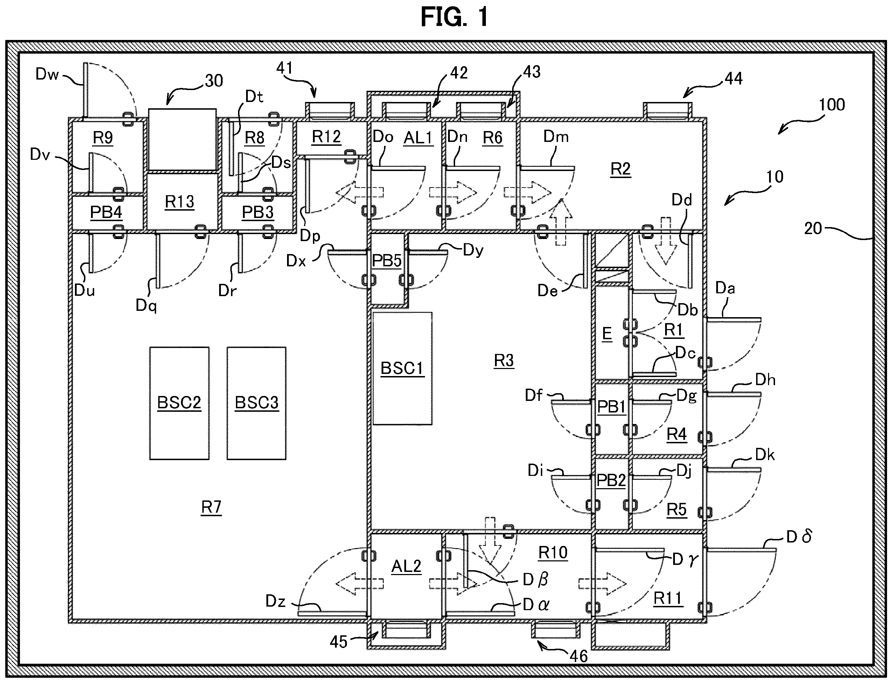

FIG. 1 is a diagram for explaining a layout of rooms in a clean room facility 100 according to an embodiment of the present invention.

In FIG. 1, an open dashed arrow shows a direction in which air flows when a door of interest (for example, a door Dm) is opened. Description below is made assuming that, as an example, a case where the clean room facility 100 is used as a facility for regenerative medicine. The present invention is not, however, limited to this.

The clean room facility 100 illustrated in FIG. 1 is a facility having a plurality of clean rooms such as a pretreatment room R3 and a preparation room R7. The clean room facility 100 as described above has in many cases a plurality of clean rooms at respective different air cleanliness levels. Pressures in adjacent clean rooms are designed to be different from each other so as to prevent air leakage from one clean room at a low air cleanliness level to another at a high air cleanliness level.

One of the examples of the described above is that the pretreatment room R3 illustrated in FIG. 1 has a room pressure higher than that of a primary changing room R2. Thus, when, for example, an operator in the primary changing room R2 opens a door De to enter the pretreatment room R3, as shown by the dashed arrow in FIG. 1, air naturally flows from the higher pressurized pretreatment room R3 to the lower pressurized primary changing room R2. Little air flows in the opposite direction from the described above owing to the control of the room pressures such that the air flow in the opposite direction is not generated. This can prevent dust from entering from the primary changing room R2 into the pretreatment room R3, thus allowing the cleanliness level in the pretreatment room R3 to be kept. Note that, in FIG. 1, when the open dashed arrow is shown between two adjacent clean rooms, one of the clean rooms has a room pressure higher than the other as described above.

In the example illustrated in FIG. 1, a dressing room R1, the primary changing room R2, the pretreatment room R3, an undressing room R10, and an anteroom R11 are disposed, which are adjacent to each other in this order. When an operator goes to work at the pretreatment room R3, the operator walks through, for example, the clean rooms in the above-described order to reach there. The pretreatment room R3 is equipped with a biohazard cabinet BSC1 in which a sample is handled. The sample handled in the biohazard cabinet BSC1 is carried in via the anteroom R4 and the pass box PB1. A product produced in the biohazard cabinet BSC1 (such as a cell-processed product) is, in turn, carried out via the pass box PB2 and the anteroom R5. Note that the pass boxes PB1, PB2 are each a space for controlling contamination (sample contamination).

The dressing room R1, the primary changing room R2, the secondary changing room R6, an airlock AL1, the preparation room R7, an airlock AL2, the undressing room R10, and the anteroom R11 are arranged next to each other in this order. When an operator goes to work at the preparation room R7, the operator walks through, for example, the clean rooms in the above-described order to reach there. The airlock AL1, AL2: are each a space for preventing dust from entering the preparation room R7 at a high air cleanliness level; and each have a room pressure higher than the other clean rooms.

A sample or the like can be taken in and out via the pass box PB5 between the preparation room R7 and the pretreatment room R3. The preparation room R7 has an air cleanliness level and a room pressure higher than those of the pretreatment room R3. This makes it possible to control contamination (sample contamination) when the door Dx and/or a door Dy is opened.

In the example of FIG. 1, the preparation room R7 is equipped with biohazard cabinets BSC2, BXC3, in each of which a sample is handled. A product produced in the biohazard cabinets BSC2, BSC3 (such as a cell-processed product) is carried out via the pass box PB3 and anteroom R8. On the other hand, a waste product or the like is carried out via the pass box PB4 and an anteroom R9.

An air handling unit 30 illustrated in FIG. 1 is a device that adjusts a temperature or the like of air supplied to each of the clean rooms. In the example of FIG. 1, the air handling unit 30 is adjacent via a wall to a space R13 between the pass boxes PB3, PB4. Fan filter units 41 to 46 illustrated in FIG. 1 each exhaust air from a clean room of interest (or return the air to a chamber not illustrated).

Note that each of the dressing room R1, the primary changing room R2, the pretreatment room R3, the anterooms R4, R5, the secondary changing room R6, the preparation room R7, the anterooms R8, R9, the undressing room R10, the anteroom R11, and the airlocks AL1, AL2 illustrated in FIG. 1 corresponds to a "clean room". A temperature or a room pressure of each of the clean rooms is kept at a prescribed level.

As illustrated in FIG. 1, a building 10 having a plurality of the clean rooms is surrounded by an exterior wall 20. The exterior wall 20 is made of, for example, concrete or any other appropriate material. Note that, though not illustrated in FIG. 1, the exterior wall 20 is provided with at least one door, through which one can come inside and go outside.

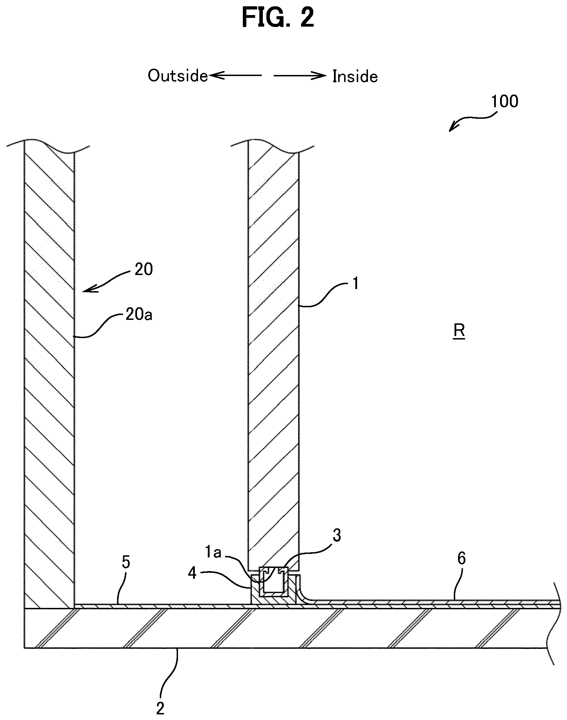

FIG. 2 is a partial cross sectional diagram illustrating the clean room facility 100.

As illustrated in FIG. 2, the clean room facility 100 includes, in addition to the above-described exterior wall 20 (see also FIG. 1), a panel member 1, a floor base 2, a rail member 3, and a support member 4. The clean room facility 100 also includes a base sheet 5 (a second sheet) and a finish sheet 6 (a first sheet).

The panel member 1 is a plate-like heat-insulated member which separates a clean room R from the other (a space outside the clean room R). The panel member 1 constitutes a side wall of the clean room R. The panel member 1 has an upwardly concave groove 1a on a bottom face thereof. The panel member 1 faces the exterior wall 20.

The above-described clean room R having the panel member 1 (the side wall) facing the exterior wall 20 may be, for example, the preparation room R7 illustrated in FIG or any other clean room. More specifically, each of the aforementioned clean rooms has the panel member 1, all or part of which faces the exterior wall 20, as illustrated in FIG. 2, except for the pretreatment room R3 (see FIG. 1) which is surrounded by other clean rooms. Note that, even when the clean room R has any one of the fan filter units 41 to 46 (see FIG. 1), a lower end of the panel member 1 constituting the clean room R faces the exterior wall 20.

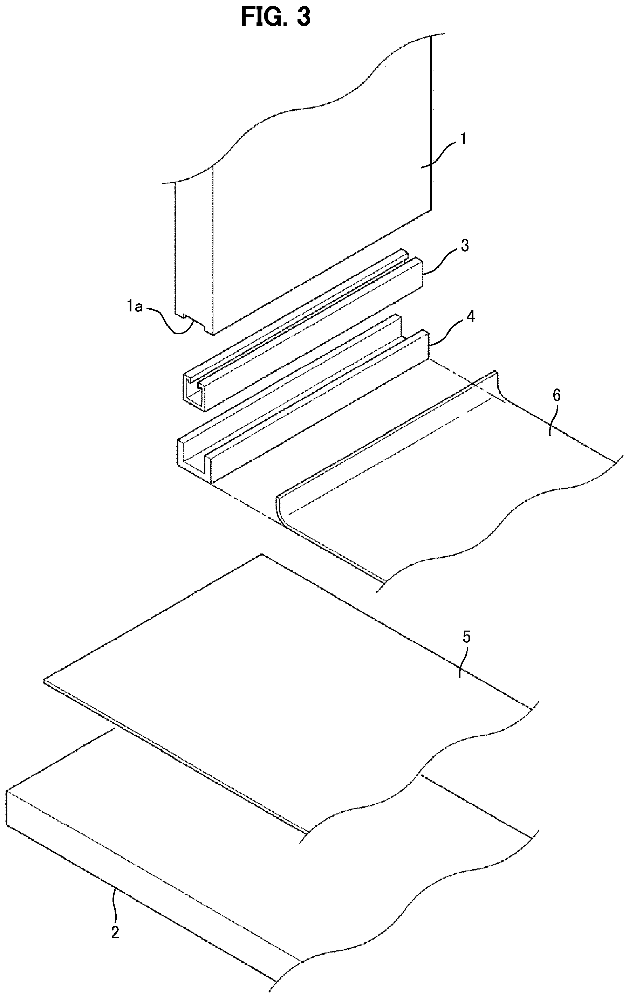

The floor base 2 illustrated in FIG. 2 is a plate-like thick member which supports the support member 4 under the panel member 1, and other equipment installed in the clean room R (not illustrated). The floor base 2 is made of, for example, concrete and extends horizontally. The exterior wall 20 illustrated in FIG. 2 is, as described above, a wall provided around the building 10 (see FIG. 1) of the clean room R. Explanation below is made with reference to FIG. 2 and also a partial exploded perspective diagram of FIG. 3.

FIG. 3 is a partial exploded perspective diagram illustrating the clean room facility 100.

Note that illustration of the exterior wall 20 (see FIG. 2) is omitted in FIG. 3.

The rail member 3 illustrated in FIG. 3 is a member for smoothly moving the panel member 1 along an upper surface of the rail member 3. The rail member 3: is made of resin or metal; and is engaged with the groove 1a under the bottom face of the panel member 1 (see also FIG. 2).

The support member 4 illustrated in FIG. 3: is a member made of metal (for example, aluminum); and supports the rail member 3. The support member 4: is provided on an upper side of the floor base 2; and extends in a direction same as that of the rail member 3. A base sheet 5 to be described hereinafter is provided between the floor base 2 and the rail member 3 (see also FIG. 2).

When the clean room facility 100 is built, the support member 4 is installed on a line between the clean room R (see FIG. 2) and an external space thereof (such as other clean room), when viewed from the above. The rail member 3: is then put into the support member 4 and is fixed using a screw or the like (not illustrated). The panel member 1 is installed by engaging the groove 1a of the panel member 1 with the rail member 3. In many cases, a plurality of the panel members 1 are provided in sequence on the linear rail member 3. When an operator moves one panel member 1 after another along the rail member 3, respective lateral faces (a face on a front and a back side with respect to the plane of FIG. 2) of the adjacent panel members 1 come into contact with each other.

The base sheet 5 (the second sheet) illustrated in each of FIG. 2 and FIG. 3 is a sheet for preventing insects (for example, a psocid) from entering the clean room R. A material of which the base sheet 5 is made includes, for example, though not limited to, vinyl chloride resin (polyvinyl chloride). The base sheet 5 is not visible from the inside of the clean room R, though capable of preventing insects from entering the clean room R as described above.

As illustrated in FIG. 2, the base sheet 5 is provided between the floor base 2 and the finish sheet 6 when viewed from the above of the clean room R. The base sheet 5 is laid also under the panel member 1 which serves as the side wall of the clean room R. In the example of FIG. 2, the base sheet 5 is provided between the support member 4 under the panel member 1 and the floor base 2.

The base sheet 5 is extended to a vicinity of the exterior wall 20 of the building 10 (see FIG. 1) including the clean room R. It is preferable that the base sheet 5 is extended to a vicinity of a lower end of a wall surface 20a on a side nearer the clean room R, of the exterior wall 20. In the example of FIG. 2, an edge of the base sheet 5 is situated at the lower end of the wall surface 20a nearer the clean room R, of the exterior wall 20. That is, the base sheet 5 provided between the floor base 2 and the finish sheet 6 is extended all the way below the panel member 1 to the lower end of the wall surface 20a of the exterior wall 20. To be described in detail hereinafter, the base sheet 5 is extended to the vicinity of the exterior wall 20 as described above, which can prevent insects from entering the clean room R.

Before used, the base sheet 5 is typically rolled up into a tube. When the clean room facility 100 is built, a worker in charge rolls out and spreads the rolled-up base sheet 5 over the floor base 2, to thereby arrange the long base sheet 5 over the floor base 2. More specifically, the base sheet 5 is stuck on an upper surface of the floor base 2 using an appropriate adhesive. Note that a plurality of the adjacent long base sheets 5 are, for example, welded using a liquid prepared by melting the base sheet 5 (or a material similar to that from which the base sheet 5 is made), to thereby make a plurality of the base sheets 5 into one unit.

The finish sheet 6 (the first sheet) illustrated in each of FIG. 2 and FIG. 3: is a sheet which forms a floor surface of the clean room R; and is provided on an upper side of the floor base 2 of the clean room R. As described above, the base sheet 5 is placed between the finish sheet 6 and the floor base 2. Note that the finish sheet 6 is made of, for example, but not limited to, vinyl chloride resin. In preparing the finish sheet 6, for example, a material for improving a chemical-resistant, an anti-slip, or an antistatic capacity may be added thereto. In the example of FIG. 2, the edge of the finish sheet 6: is bent near the support member 4; and is then provided to reach an upper end of the support member 4.

Before used, similarly to the base sheet 5, the finish sheet 6 is typically stored in a roll shape. When the clean room facility 100 is built, a worker rolls out and spreads the rolled-up finish sheet 6 over the base sheet 5, to thereby arrange the long finish sheet 6 over the floor base 2. The long finish sheet 6 is cut off in conformity to a shape of the clean room R. The finish sheet 6 is stuck on an upper surface of the base sheet 5 using an appropriate adhesive. Note that a plurality of the adjacent long finish sheets 6 are, for example, welded using a liquid prepared by melting the finish sheet 6 (or a material similar to that from which the finish sheet 6 is made), to thereby make a plurality of the finish sheets 6 into one unit. The combined finish sheet 6 is provided to each of the clean rooms R.

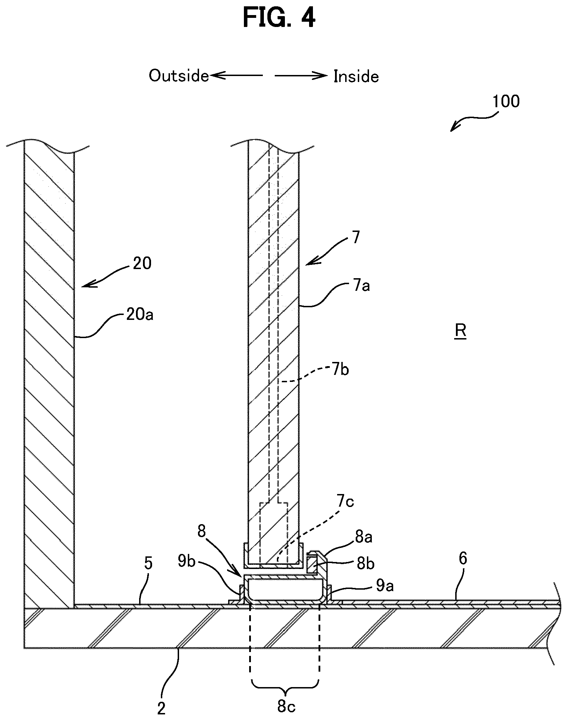

FIG. 4 is another partial cross sectional diagram illustrating the clean room facility 100 according to the embodiment.

Note that the floor base 2 or the exterior wall 20 illustrated in FIG. 4 is the same as that illustrated in FIG. 2. The clean room R illustrated in FIG. 4 is, for example, the anteroom R9 illustrated in FIG. 1. The door 7 illustrated in FIG. 4 is, for example, a door Dw of the anteroom R9 illustrated in FIG. 1. Note that the clean room R illustrated in FIG. 4 is not limited to the anteroom R9 and may be, for example, the dressing room R1 illustrated in FIG. 1 or may be any one of the anterooms R4, R5, R11, and the like. In FIG. 4, a space between the door 7 and the exterior wall 20 is seemingly small. The space is actually, however, large enough such that when the door 7 can be opened without being interfered by the exterior wall 20.

As illustrated in FIG. 4, the clean room facility 100 includes the door 7, an exterior frame 8, and seal members 9a, 9b, in addition to the floor base 2, the exterior wall 20, the finish sheet 6 (the first sheet), and the base sheet 5 (the second sheet) described above. The door 7 is opened and closed when one comes in and out of the clean room R. The door 7 includes a frame 7a as a frame body and a heat insulator (not illustrated) provided inside the frame 7a.

As illustrated in FIG. 4, the frame 7a of the openable and closable door 7 includes a hollow inside 7b. The frame 7a also includes an opening 7c on a bottom face thereof. The hollow inside 7b and the opening 7c of the frame 7a are made to communicate with each other. The base sheet 5 is provided also under the frame 7a with the door 7 closed.

The exterior frame 8 is a rectangle frame-shaped metal member provided around the door 7 when closed. The exterior frame 8 has a hinge (not illustrated) which supports the door 7 openably and closably. As illustrated in FIG. 4, the exterior frame 8 includes a restriction member 8a and a packing 8b. The restriction member 8a restricts a hinge direction in which the door 7 is opened.

In the example illustrated in FIG. 4, the restriction member 8a of the exterior frame 8 is disposed near a lower end of the door 7 on a side nearer the clean room R (the inside). An upper end of the restriction member 8a is positioned higher than the lower end of the door 7. When one comes out of the clean room R, one turns a knob or the like (not illustrated) of the door 7 to open the same. A packing 8b is provided on the restriction member 8a on a side nearer the door 7, so as to improve airtightness of the clean room R.

Seal members 9a, 9b: are used for increasing airtightness of the clean room R and preventing insects from entering the clean room R; and are provided on an inside and an outside of the exterior frame 8 of the door 7, respectively. Material of which the seal members 9a, 9b is made of is, for example, silicone. Each of a pair of the seal members 9a, 9b: has an L-shaped (or an inverted L-shaped) cross section; and extends along the exterior frame 8 of the the door 7. The seal members 9a, 9b are each provided near an edge of a contact face 8c on which the exterior frame 8 comes in contact with the base sheet 5.

The seal member 9a is provided on the exterior frame 8 on the side nearer the clean room R (the inside) near the edge of the contact face 8c illustrated in FIG. 4. That is, the seal member 9a: closely comes in contact with a wall surface on the side nearer the clean room R (the inside) of the exterior frame 8; and also closely comes in contact with an upper surface of the base sheet 5. An edge of the the finish sheet 6 is not curved and is stuck against the seal member 9a. That is, the seal member 9a is joined to the finish sheet 6 near the edge of the contact face 8c at which the exterior frame 8 comes in contact with the base sheet 5. This makes it possible to, even when an insect creeps into a very small space between the exterior frame 8 and the floor base 2, prevent the insect from penetrating the clean room R. Additionally, the seal member 9a is made substantially flush with the finish sheet 6, which looks good from the inside of the clean room R.

The seal member 9b is provided on the exterior frame 8 on the side nearer the exterior wall 20 (the outside) near the edge of the contact face 8c illustrated in FIG. 4. The seal member 9b: closely comes in contact with a wall surface on the side nearer the exterior wall 20 (the outside) of the exterior frame 8; and also closely come in contact with the upper surface of the base sheet 5. Arrangement of the seal members 9a, 9b makes it possible to prevent the insect from penetrating the clean room R through a very small space between the exterior frame 8 and the floor base 2.

As described above, the base sheet 5 is interposed between the floor base 2 and the finish sheet 6. The base sheet 5: is provided also under the exterior frame 8 of the door 7 of the clean room R; and is extended to a vicinity of the exterior wall 20 of the building 10 (see FIG. 1) including the clean room R. In the example of FIG. 4, an edge of the base sheet 5 is situated at a lower end of the wall surface 20a on a side nearer the clean room R of the exterior wall 20. That is, the base sheet 5 laid between the floor base 2 and the finish sheet 6 is extended through a bottom side of the exterior frame 8 of the door 7 to reach the lower end of the wall surface 20a on the side nearer the clean room R, of the exterior wall 20.

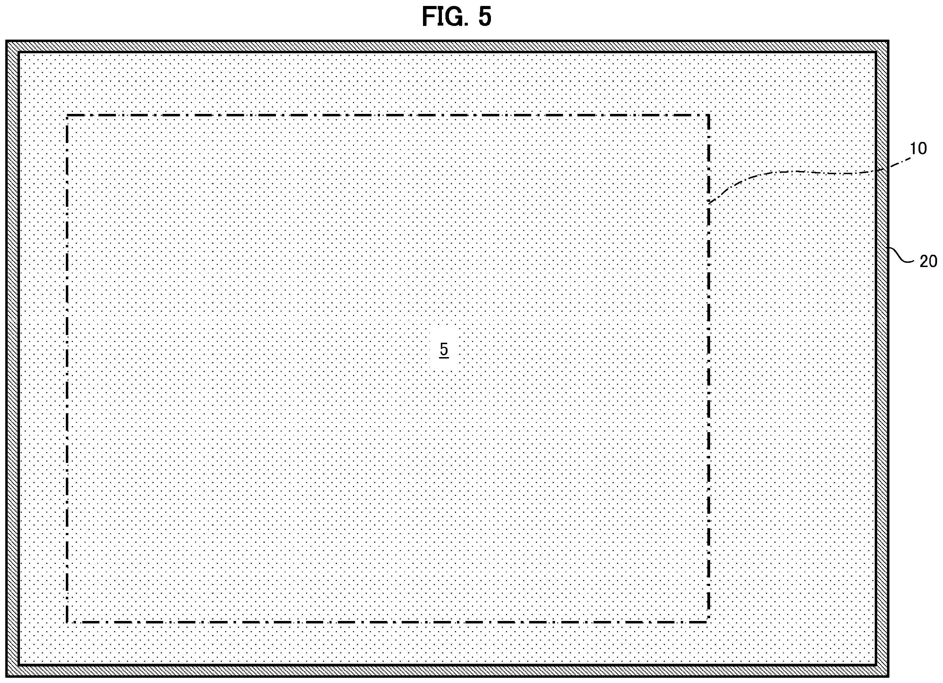

FIG. 5 is a diagram for explaining a range in which the base sheet 5 is disposed, when viewed from the above.

Note that the exterior wall 20 illustrated in FIG. 5 is the same as the exterior wall 20 illustrated in FIG. 1. In FIG. 5, a range of the building 10 (see FIG. 1) including a plurality of the clean rooms when viewed from the above is shown by a dashed-dotted line. In FIG. 5, a range of the base sheet 5 (see also FIG. 2) when viewed from the above is dotted.

The building 10 illustrated in FIG. 5 includes a plurality of the clean rooms (such as the pretreatment room R3 and the preparation room R7 illustrated in FIG. 1) as described above. The base sheet 5 as one unit is laid on a plurality of the clean rooms. Further, in the example of FIG. 5, the base sheet 5 is extended to an inside wall surface (on the side nearer the clean room R: see FIG. 2) of the exterior wall 20, when viewed from the above. Note that when there is a door (not illustrated) in the exterior wall 20, the base sheet 5 is laid to, for example, a position corresponding to an exterior frame of the door.

With the structure as described above, in building the clean room facility 100 (see FIG. 1), the base sheet 5 can prevent an insect from entering the clean room R (see FIG. 2), even when the insect (or an egg of the insect) has been present on the floor base 2 (see FIG. 2). That is, as illustrated in FIG. 5, the base sheet 5 is laid on substantially all over the range surrounded by the exterior wall 20. Even when an insect is present in a very small space between the base sheet 5 and the floor base 2 (see FIG. 2), the insect can be trapped within the space. Note that, if and when there is an insect having a possibility of entering the clean room R, in many cases, the insect has already been present on the floor base 2 when a facility of interest is built.

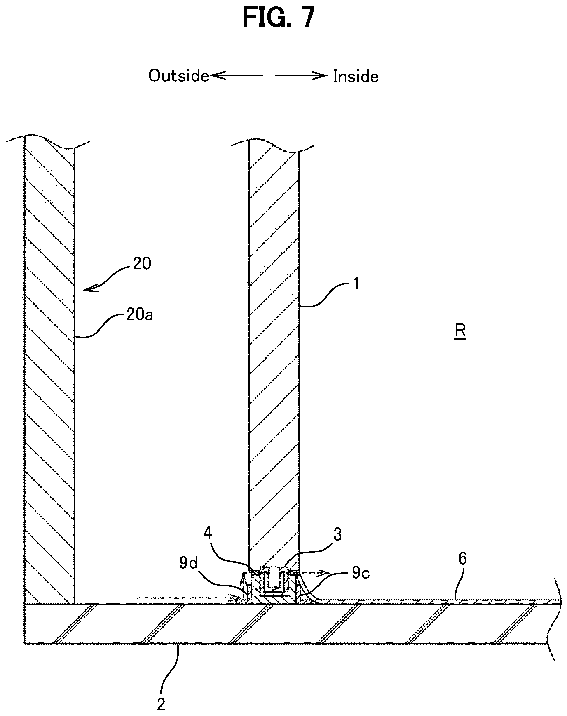

FIG. 7 is a partial cross sectional diagram illustrating a clean room facility according to a comparative example of the present invention. In the comparative example of FIG. 7, the base sheet 5 is not provided on the floor base 2; and the finish sheet 6 is provided on the floor base 2 in the clean room R. Also in the comparative example of FIG. 7, seal members 9c, 9d for preventing insects from entering the clean room R are provided on an inner and an outer side of the support member 4, respectively.

The structure illustrated in FIG. 7 has a possibility that, for example, when an insect (or an egg of the insect) is present on the floor base 2 on an outer side of the panel member 1 (on a side nearer the exterior wall 20) in building a clean room facility of interest, the insect enters the clean room R through a path indicated by dashed arrows in FIG. 7. For example, the insect can enter the clean room R through a space between the panel member 1 and the rail member 3.

In addition to the above-described space, there is another small space between the rail member 3 and the support member 4. An insect may: move along the rail member 3 through those spaces; move around the clean room R; and finally enter the clean room R. There is another possibility that, when there is an insect between the floor base 2 and the finish sheet 6, the insect enters the clean room R through a small space between an edge of the finish sheet 6 and the support member 4.

When the door 7 (see FIG. 4) is disposed in the clean room R, for example, there is a possibility that an insect: crawls up on the hollow inside 7b of the frame 7a; and finally enters the clean room R through a small space at or around an ignition (not illustrated) for a key of the door 7. As described above, the structure according to the comparative example in which the base sheet 5 is not provided has a possibility that an insect enters the clean room R through various paths.

As described above, when there is an insect having a possibility of entering the clean room R, in many cases, the insect has already been present on the floor base 2 when a facility of interest is built. In particular, when the clean room facility is built (or rebuilt) using the existent floor base 2, there are some cases in which not all insects (or eggs of the insects) having been present on the floor base 2 can be removed. In those cases, possible surviving insects on the floor base 2 may enter the clean room R. Note that in order to completely remove insects on the floor base 2, it is required to spray chemicals or the like. Such a chemical spray in full scale cannot be actually, however, done in many cases. This is because, when chemicals such as an insecticide is used, there is a possible risk of a mixture of a chemical into a product (such as a cell-processed product) or a risk to a human body or the environment.

Meanwhile, in this embodiment, the base sheet 5 is provided between the floor base 2 and the finish sheet 6 in the clean room R (see FIG. 2 and FIG. 4); and the base sheet 5 is extended to a vicinity of the exterior wall 20 through a bottom side of the panel member 1 (or the exterior frame 8 of the door 7) (see also FIG. 5). The above-described structure makes it possible to, even when there is an insect on the floor base 2, the insect will be trapped between the base sheet 5 and the floor base 2. That is, the base sheet 5 prevents the insect from crawling upward. This can prevent the insect from entering the clean room R through the space on the bottom side of the panel member 1 (see FIG. 2) or the like.

In this embodiment, unlike the above-described Patent Document 1, it is not particularly necessary to provide a blower (not illustrated) in an underfloor space for removing insects by air pressure. This can reduce a facility cost of the clean room facility 100. As described above, in this embodiment, the clean room facility 100 capable of preventing an insect from entering the clean room R at a low cost can be provided.

### <<Variations>>

The clean room facility 100 according to the embodiment of the present invention has been described above. The present invention is not, however, limited to the aforementioned description and various changes are possible.

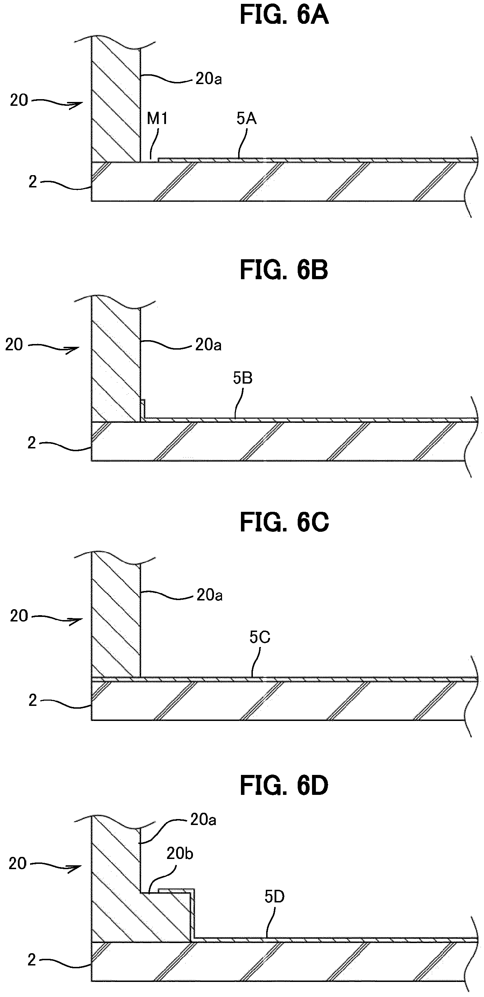

For example, in the embodiment, as illustrated in FIG. 2 or FIG. 4, description is made assuming a case where the base sheet 5 is extended to the lower end of the wall surface 20a of the exterior wall 20 on the side nearer the clean room R. The present invention is not, however, limited to the case and may be another cases as illustrated in FIG. 6A to FIG. 6D.

FIG. 6A is a cross sectional diagram illustrating a clean room facility including the exterior wall 20, the floor base 2, and a base sheet 5A according to a non-claimed first variation of the present disclosure.

Note that in FIG. 6A, illustration of the finish sheet 6 (see FIG. 2 and FIG. 4), the panel member 1 (see FIG. 2), the rail member 3 (see FIG. 2), the support member 4 (see FIG. 2), and the like are omitted. In the first variation illustrated in FIG. 6A, a gap M1 is provided between an edge of the base sheet 5A and the lower end of the wall surface 20a on a side nearer a clean room, of the exterior wall 20. In the above-described structure, providing the base sheet 5A can prevent ingress of an insect from the floor base 2 into the clean room R. Also in the structure illustrated in FIG. 6A, the base sheet 5A is extended to a vicinity of the exterior wall 20.

FIG. 6B is a cross sectional diagram illustrating a clean room facility including the exterior wall 20, the floor base 2, and a base sheet 5B according to a second variation of the present invention.

In the second variation illustrated in FIG. 6B, an edge of the base sheet 5B is bent substantially at right angle. Further, the base sheet 5B is bonded to an upper surface of the floor base 2, and the edge of the base sheet 5B is bonded to a vicinity of the lower end of the wall surface 20a on a side nearer a clean room, of the exterior wall 20. In the above-described structure, providing the base sheet 5B can prevent ingress of an insect from the floor base 2 into the clean room R. Also in the structure illustrated in FIG. 6B, the base sheet 5B is extended to the vicinity of the exterior wall 20.

FIG. 6C is a cross sectional diagram illustrating a clean room facility including the exterior wall 20, the floor base 2, and a base sheet 5C according to a non-claimed third variation of the present disclosure.

In the third variation illustrated in FIG. 6C, the base sheet 5C is provided also between the exterior wall 20 and the floor base 2. In the above-described structure, providing the base sheet 5C can prevent ingress of an insect from the floor base 2 into the clean room R. Also in the structure illustrated in FIG. 6C, the base sheet 5C is extended to the vicinity of the exterior wall 20.

FIG. 6D is a cross sectional diagram illustrating a clean room facility including the exterior wall 20, the floor base 2, and a base sheet 5D according to a fourth variation of the present invention.

In the fourth variation illustrated in FIG. 6D, the exterior wall 20 includes a step part 20b at a lower end thereof. The step part 20b protrudes on a side nearer the clean room (on the right side with respect to the plane of FIG. 6D). The base sheet 5D is bent along an upper surface of the floor base 2 and a wall surface of the step part 20b. The base sheet 5D is bonded to the upper surface of the floor base 2 and the wall surface of the step part 20b.

In the example of FIG. 6D, the base sheet 5D is extended to a prescribed position on an upper surface of the step part 20b. In the above-described structure, providing the base sheet 5D can prevent ingress of an insect from the floor base 2 into the clean room R. Also in the structure illustrated in FIG. 6D, the base sheet 5D is extended to the vicinity of the exterior wall 20. Note that FIG. 6D illustrates a case in which the step part 20b is included in the exterior wall 20. The step part 20b may be, however, provided separately from the exterior wall 20.

The embodiment (see FIG. 2 and FIG. 4) and the first to fourth variations (see FIG. 6A to FIG. 6D, respectively) can be combined accordingly in the present invention. For example, in a prescribed range in the exterior wall 20 (see FIG. 1) surrounding the building 10 of the clean room facility 100, the base sheet 5 may be provided according to the embodiment (see FIG. 2); in another range in the exterior wall 20, the base sheet 5A may be provided according to the first variation (see FIG. 6A); and the former and the latter may be combined with each other. Any other various combinations are possible.

In the embodiment, description is made assuming a case where the building 10 of the clean room facility 100 (see FIG. 1) is surrounded by the exterior wall 20. The present invention is not, however, limited to this. That is, a part of the exterior wall 20 may not be provided and may be opened. In that case, in a portion in which the exterior wall 20 is opened, the base sheet 5 may be laid to a vicinity of an imaginary line extended from a lower end of the wall surface 20a of the exterior wall 20.

In the embodiment, description is made assuming a case where the door 7 (see FIG. 4) of single swing type is provided in the clean room R. The present invention is not, however, limited to this. For example, the door 7 may be of double swing or sliding type. The door 7 may be of automatic type which automatically opens and closes in response to a result detected by a human detection sensor (not illustrated) or detected from a door key (not illustrated).

In the embodiment, description is made assuming a case where the material of which the finish sheet 6 or the base sheet 5 is made contains vinyl chloride resin. The present invention is not, however, limited to this. The finish sheet 6 or the base sheet 5 may be made of any other material as long as the material has little possibility of being bitten by an insect.

In the embodiment, description is made assuming a case where the seal members 9a, 9b are disposed inside and outside of the exterior frame 8 of the door 7 (see FIG. 4), respectively. The seal members 9a, 9b may not be, however, provided.

In the embodiment, a pair of seal members (not illustrated) may be provided inside and outside of the support member 4 (see FIG. 2). This can further prevent ingress of an insect into the clean room R.

In the embodiment (see FIG. 2 and FIG. 4), description is made assuming a case where the base sheet 5 and the finish sheet 6 are provided in the clean room facility 100. Another sheet may be, however, additionally provided therein. For example, another sheet (not illustrated) may be provided between the base sheet 5 and the finish sheet 6. A still another sheet (not illustrated) may be provided between the floor base 2 and the base sheet 5.

The structure of the clean room facility 100 illustrated in FIG. 1 is given as an example and is not limited to this. The embodiment can be applied to clean room facilities having respective various layouts.

In the embodiment, description is made assuming a case where the clean room facility 100 is used as a facility for regenerative medicine. The embodiment is not, however, limited to this. The embodiment is also applicable to various fields such as manufacture of an industry product and a pharmaceutical product, and food industry.

The embodiment is intended to be illustrative of the present invention in an easily understandable manner and the present invention is not limited to that including all of the components explained in the embodiment, but is defined by the appended claims.

The above-described mechanisms and structures which are deemed necessary for explanation are illustrated, and not all of them which are necessary for a product are illustrated.

### DESCRIPTION OF REFERENCE NUMERALS

1 panel member
2 floor base
3 rail member
4 support member
5, 5A, 5B, 5C, 5D base sheet (second sheet)
6 finish sheet (first sheet)
7 door
7a frame
7b inside
7c opening
8 exterior frame
8a restriction member
8b packing
8c contact face
9a, 9b seal member
10 building
20 exterior wall
20a wall surface
100 clean room facility
AL1, AL2 airlock (clean room)
R clean room
R1 dressing room (clean room)
R2 primary changing room (clean room)
R3 pretreatment room (clean room)
R4, R5, R8, R9, R11 anteroom (clean room)
R6 secondary changing room (clean room)
R7 preparation room (clean room)
R10 undressing room (clean room)

## Claims

1. A clean room facility (100), comprising;
a first sheet (6) that is provided on an upper side of a floor base (2) of a clean room (R) and forms a floor surface of the clean room (R); and
a second sheet (5) that is provided between the floor base (2) and the first sheet (6),
wherein the second sheet (5) is extended to a vicinity of an exterior wall (20) of a building (10) including the clean room (R); and is provided also under a panel member (1) which serves as a side wall of the clean room (R) and/or under an exterior frame (8) of a door (7) of the clean room (R),
wherein the second sheet (5) is bonded to an upper surface of the floor base (2) and an edge of the second sheet (5) is bonded to a lower end of a wall surface (20a) of the exterior wall (20) or is bonded to a step part (20b) provided at the exterior wall (20).

2. The clean room facility (100) according to claim 1,
wherein the door (7) includes a frame (7a) having a hollow inside (7b), and
wherein the second sheet (5) is provided also under the frame (7a).

3. The clean room facility (100) according to claim 2,
wherein the frame (7a) includes an opening on a bottom face thereof, and
wherein the hollow inside (7b) and the opening of the frame (7a) are made to communicate with each other.

4. The clean room facility (100) according to claim 1,
further comprising a seal member (9a, 9b) that is provided near an edge of a contact face (8c) on which the exterior frame (8) comes in contact with the second sheet (5).

5. The clean room facility (100) according to claim 4,
wherein the seal member (9a, 9b) provided near the edge of the contact face (8c) on a side nearer the clean room (R), of the exterior frame (8) is joined to the first sheet (6).

6. The clean room facility (100) according to claim 1,
wherein the building (10) includes a plurality of the clean rooms (R), and
wherein the second sheet (5) as one unit is provided on a plurality of the clean rooms (R).

7. The clean room facility (100) according to claim 1,
wherein the exterior wall (20) is provided around the building (10), and
wherein the second sheet (5) is extended to a vicinity of a lower end of a wall surface (20a) on a side nearer the clean room (R), of the exterior wall (20).

8. The clean room facility (100) according to claim 1,
wherein a material of which the second sheet (5) is made contains vinyl chloride resin.

## Patentansprüche

1. Reinraumeinrichtung (100) umfassend:
eine erste Platte (6), die auf einer Oberseite einer Bodenbasis (2) eines Reinraums (R) vorgesehen ist und eine Bodenfläche des Reinraums (R) bildet; und
eine zweite Platte (5), die zwischen der Bodenbasis (2) und der ersten Platte (6) vorgesehen ist,
wobei sich die zweite Platte (5) bis in die Nähe einer Außenwand (20) eines den Reinraum (R) enthaltenden Gebäudes (10) erstreckt und auch unter einem Plattenelement (1), das als Seitenwand des Reinraums (R) dient, und/oder unter einem Außenrahmen (8) einer Tür (7) des Reinraums (R) vorgesehen ist,
wobei die zweite Platte (5) mit einer Oberseite der Bodenbasis (2) verbunden ist und eine Kante der zweiten Platte (5) mit einem unteren Ende einer Wandfläche (20a) der Außenwand (20) verbunden ist oder mit einem an der Außenwand (20) vorgesehenen Stufenteil (20b) verbunden ist.

2. Reinraumeinrichtung (100) nach Anspruch 1,
wobei die Tür (7) einen Rahmen (7a) mit einer hohlen Innenseite (7b) enthält und
wobei die zweite Platte (5) auch unter dem Rahmen (7a) vorgesehen ist.

3. Reinraumeinrichtung (100) nach Anspruch 2,
wobei der Rahmen (7a) eine Öffnung an seiner Unterseite enthält und
wobei die hohle Innenseite (7b) und die Öffnung des Rahmens (7a) miteinander in Verbindung gebracht sind.

4. Reinraumeinrichtung (100) nach Anspruch 1,
ferner umfassend ein Dichtungselement (9a, 9b), das nahe einer Kante einer Kontaktfläche (8c) vorgesehen ist, an der der äußere Rahmen (8) mit der zweiten Platte (5) in Kontakt kommt.

5. Reinraumeinrichtung (100) nach Anspruch 4,
wobei das Dichtungselement (9a, 9b), das nahe der Kante der Kontaktfläche (8c) an einer dem Reinraum (R) näheren Seite des Außenrahmens (8) vorgesehen ist, mit der ersten Platte (6) verbunden ist.

6. Reinraumeinrichtung (100) nach Anspruch 1,
wobei das Gebäude (10) mehrere der Reinräume (R) enthält und
wobei die zweite Platte (5) als eine Einheit an mehreren der Reinräume (R) vorgesehen ist.

7. Reinraumeinrichtung (100) nach Anspruch 1,
wobei die Außenwand (20) um das Gebäude (10) herum vorgesehen ist und
wobei sich die zweite Platte (5) bis in die Nähe eines unteren Endes einer Wandfläche (20a) auf einer dem Reinraum (R) näheren Seite der Außenwand (20) erstreckt.

8. Reinraumeinrichtung (100) nach Anspruch 1,
wobei ein Material, aus dem die zweite Platte (5) hergestellt ist, Vinylchloridharz enthält.

## Revendications

1. Installation de salle blanche (100), comprenant :
une première feuille (6) qui est prévue sur un côté supérieur d'une base de plancher (2) d'une salle blanche (R) et forme une surface de plancher de la salle blanche (R) ; et
une seconde feuille (5) qui est prévue entre la base de plancher (2) et la première feuille (6),
dans laquelle la seconde feuille (5) s'étend jusqu'à proximité d'une paroi extérieure (20) d'un bâtiment (10) comprenant la salle blanche (R) ; et est prévue également sous un élément de panneau (1) qui sert de paroi latérale de la salle blanche (R) et/ou sous un cadre extérieur (8) d'une porte (7) de la salle blanche (R),
dans laquelle la seconde feuille (5) est liée à une surface supérieure de la base de plancher (2) et un bord de la seconde feuille (5) est lié à une extrémité inférieure d'une surface de paroi (20a) de la paroi extérieure (20) ou est lié à une partie de marche (20b) prévue au niveau de la paroi extérieure (20).

2. Installation de salle blanche (100) selon la revendication 1,
dans laquelle la porte (7) comprend un cadre (7a) ayant un intérieur creux (7b), et
dans laquelle la seconde feuille (5) est prévue également sous le cadre (7a).

3. Installation de salle blanche (100) selon la revendication 2,
dans laquelle le cadre (7a) comprend une ouverture sur une face inférieure de celui-ci, et
dans laquelle l'intérieur creux (7b) et l'ouverture du cadre (7a) sont amenés à communiquer l'un avec l'autre.

4. Installation de salle blanche (100) selon la revendication 1,
comprenant en outre un élément d'étanchéité (9a, 9b) qui est prévu près d'un bord d'une face de contact (8c) sur laquelle le cadre extérieur (8) vient en contact avec la seconde feuille (5).

5. Installation de salle blanche (100) selon la revendication 4,
dans laquelle l'élément d'étanchéité (9a, 9b) prévu près du bord de la face de contact (8c) sur un côté plus proche de la salle blanche (R), du cadre extérieur (8) est joint à la première feuille (6).

6. Installation de salle blanche (100) selon la revendication 1,
dans laquelle le bâtiment (10) comprend une pluralité des salles blanches (R), et
dans laquelle la seconde feuille (5) en tant qu'unité est prévue sur une pluralité des salles blanches (R).

7. Installation de salle blanche (100) selon la revendication 1,
dans laquelle la paroi extérieure (20) est prévue autour du bâtiment (10), et
dans laquelle la seconde feuille (5) s'étend jusqu'à proximité d'une extrémité inférieure d'une surface de paroi (20a) sur un côté plus proche de la salle blanche (R), de la paroi extérieure (20).

8. Installation de salle blanche (100) selon la revendication 1,
dans laquelle un matériau dont la seconde feuille (5) est faite contient une résine de chlorure de vinyle.
